# FASCICULE DE BREVET EUROPEEN

(11) **EP 3 010 860 B1**
(45) Date de publication et mention de la délivrance du brevet: **05.04.2017**
(21) Numéro de dépôt: 14727868.3
(22) Date de dépôt: 29.04.2014
(51) Int. Cl.: C02F 1/38, C02F 1/28, C02F 101/32

(54) **DISPOSITIF POUR EXTRAIRE DES HYDROCARBURES D'UN MELANGE LIQUIDE.**
VORRICHTUNG ZUR EXTRAKTION VON KOHLENWASSERSTOFFEN AUS EINEM FLÜSSIGEN GEMISCH
DEVICE FOR EXTRACTING HYDROCARBONS FROM A LIQUID MIXTURE

(30) Priorité: 18.06.2013 FR 1355693
(43) Date de publication de la demande: 27.04.2016
(73) Titulaire: Optimum Hydrocarbon Technologies, 75008 Paris (FR)
(72) Inventeur: TIREAU, Jonathan, F-92120 Montrouge (FR); PEYDECASTAING, Jérôme, F-31200 Toulouse (FR); DENIVELLE, Charles, F-13320 Bouc Bel Air (FR); MICHEL, Dominique, F-75008 Paris (FR)
(74) Mandataire: Mazabraud, Xavier
(86) Numéro de dépôt international: PCT/FR2014/051017
(87) Numéro de publication internationale: WO 2014/202850

(56) Documents cités:
- WO-A1-2009/144388

## Description

La présente invention se rapporte au domaine de la séparation des hydrocarbures contenus dans une phase aqueuse, notamment dans le cadre de la dépollution d'une eau polluée aux hydrocarbures ou du traitement des eaux de production de l'industrie pétrolière et gazière.

La dépollution des eaux polluées aux hydrocarbures se fait généralement dans un (ou des) bassin(s) ou cuve(s) de décantation, parfois appelés débourbeurs, ou à l'aide de traitements biologiques. Cependant, ces dispositifs sont généralement encombrants et nécessitent un temps de séjour important de la phase à traiter. De plus, dans le cas de la décantation, les dispositifs ne permettent généralement pas l'extraction de tous les types d'hydrocarbures et en particulier ceux dissouts dans la phase aqueuse.

Le traitement des eaux de production de l'industrie pétrolière et gazière se fait généralement à l'aide d'équipements faisant appel au principe gravitaire comme c'est le cas dans les séparateurs à décantation, les procédés de flottation et les systèmes de types cyclones et hydrocyclones. L'installation de ces dispositifs implique, dans la majeure partie des cas, un encombrement important pouvant être particulièrement pénalisant pour des structures fixes ou flottantes établies en mer. De plus, dans un souci de production optimisée et du respect des normes de rejet en vigueur, les sites de production présentent généralement un système de traitement composé de trois, voire quatre, dispositifs, impliquant des temps de traitement prolongés et des opérations de maintenance récurrentes.

L'invention a pour but de proposer un dispositif peu encombrant basé sur un procédé simple à mettre en oeuvre qui permette notamment un traitement rapide et en continu d'une phase aqueuse chargée en hydrocarbures y compris si ces derniers sont dissouts.

Selon un premier objet de l'invention, un tel dispositif de traitement pour un liquide, notamment une eau, chargée en hydrocarbures, est caractérisé en ce qu'il comprend :
- une enceinte,
- un arbre, monté tournant dans ladite enceinte ; et,
- des cartouches de filtration remplies d'un matériau sorbant, liées
en rotation avec l'arbre ;
le dispositif pouvant prendre :
- une position statique, dans laquelle l'eau chargée peut être filtrée par lesdites cartouches ; et,
- une position d'essorage, dans laquelle l'arbre entraîne les cartouches en rotation et dans laquelle les hydrocarbures sont restitués par les cartouches grâce à la force centrifuge.

De préférence, les cartouches de filtration sont amovibles.

Dans un mode de réalisation, avantageusement, l'arbre comprend un canal et pour chaque cartouche de filtration une canalisation en forme de bras est prévue pour amener le liquide chargé depuis le canal jusqu'à une première extrémité de ladite cartouche. Le dispositif peut aussi, pour chaque cartouche de filtration comprendre une canalisation en forme de bras prévue pour amener le liquide filtré depuis une deuxième extrémité de la cartouche jusqu'à un canal d'évacuation formé dans l'arbre. De préférence, chaque bras est déconnectable, de préférence de façon automatisée à l'extrémité correspondante.

Dans la position statique, les cartouches de filtration sont disposées sensiblement verticalement et en ce que chaque cartouche porte un axe de basculement, disposé de sorte que dans la position d'essorage, sous l'effet de la force centrifuge, la cartouche prend une position sensiblement horizontale.

Dans un autre mode de réalisation, chaque cartouche de filtration a une forme de secteur cylindrique et les cartouches sont disposées par couches cylindriques autour de l'arbre, chaque cartouche communiquant avec une cartouche voisine d'une couche voisine par des orifices appropriés, de sorte que, dans la position statique, le liquide parcourt chaque cartouche radialement, puis sa voisine de la couche suivante. Chaque cartouche comprend avantageusement un orifice périphérique, maintenu bouché en position statique et ouvert en position d'essorage, de sorte que les hydrocarbures retenus par le matériau sorbant sont éjectés par la force centrifuge au travers de cet orifice périphérique.

Selon un autre objet de l'invention, un système de filtration est caractérisé en ce qu'il comprend, en outre des cartouches de coalescence compatibles avec un dispositif selon l'invention.

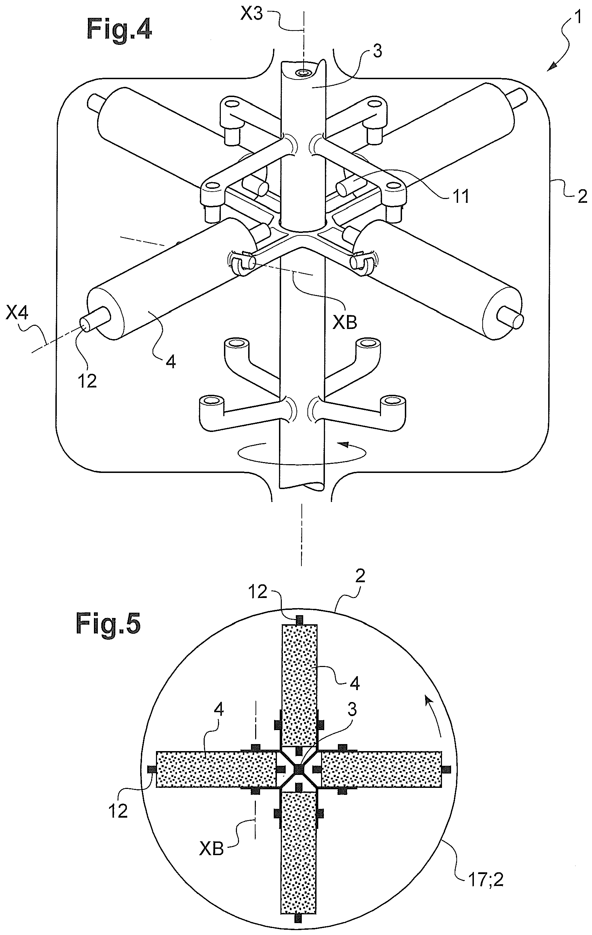

Plusieurs modes d'exécution de l'invention seront décrits ci-après, à titre d'exemples non limitatifs, en référence aux dessins annexés dans lesquels :

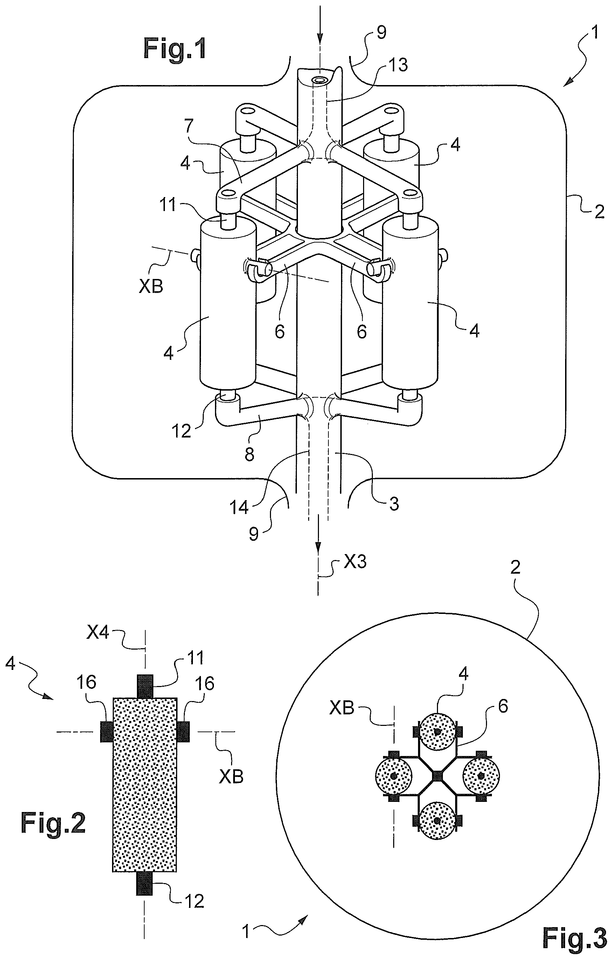

- Les figures 1 à 5 illustrent un premier mode de réalisation pour un dispositif selon l'invention ; dans lesquelles,
   ∘ la figure 1 est une vue en élévation et en perspective illustrant une position de filtration pour le dispositif ;
   ∘ la figure 2 est une vue en élévation d'une cartouche de filtration pour le dispositif ;
   ∘ la figure 3 est une vue de dessus du dispositif dans la position de la figure 1 ;
   ∘ la figure 4 est une vue en élévation et en perspective illustrant une position en cours d'essorage pour le dispositif ; et,
   ∘ La figure 5 est une vue de dessus du dispositif dans la position de la figure 4 ;
- La figure 6 est une vue de dessus, semblable aux figures 3 et 5, illustrant un deuxième mode de réalisation pour un dispositif selon l'invention, optimisation du dispositif des figures 1 à 5 ;
- La figure 7 est une vue en élévation, illustrant, à une échelle supérieure à celle de la figure 6, une première cartouche adaptée au dispositif de la figure 6 ;
- La figure 8 est une vue en élévation, illustrant, à la même échelle que la figure 7, une deuxième cartouche complémentaire à la première ;
- La figure 9 est une vue de dessus de la deuxième cartouche, sur son support ;
- La figure 10 est une vue latérale, en élévation, de la deuxième cartouche, sur son support ;
- Les figures 11 à 14 illustrent un troisième mode de réalisation pour l'invention, dans lesquelles :

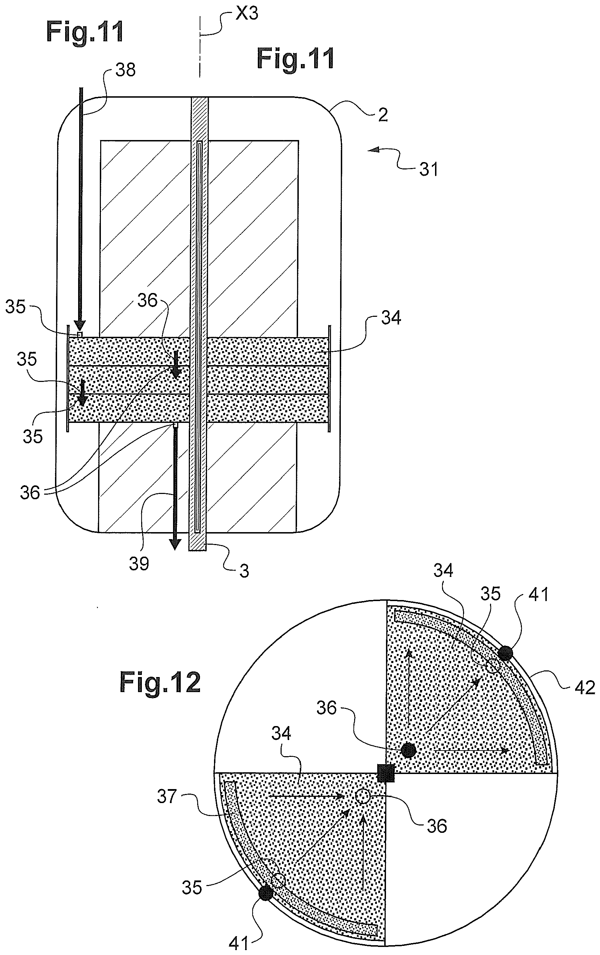

   - la figure 11 est une vue en élévation et en coupe d'un dispositif selon le troisième mode de réalisation, dans une position de filtration ;
   - la figure 12 est une vue de dessus du dispositif de la figure 11, aussi en position de filtration ;

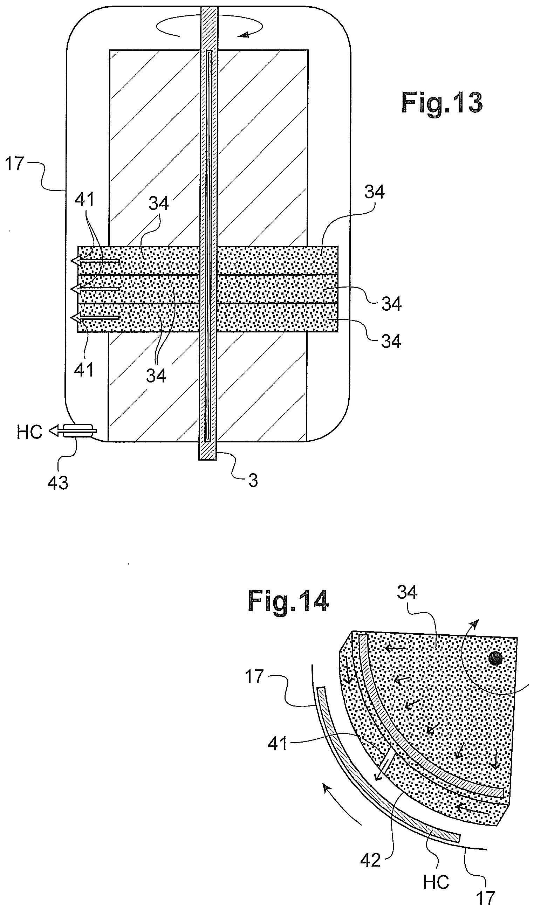

   - la figure 13 est une vue en élévation et en coupe d'un dispositif selon le troisième mode de réalisation, dans une position d'essorage ;
   - la figure 14 est une vue de dessus du dispositif de la figure 11, aussi en position d'essorage ;

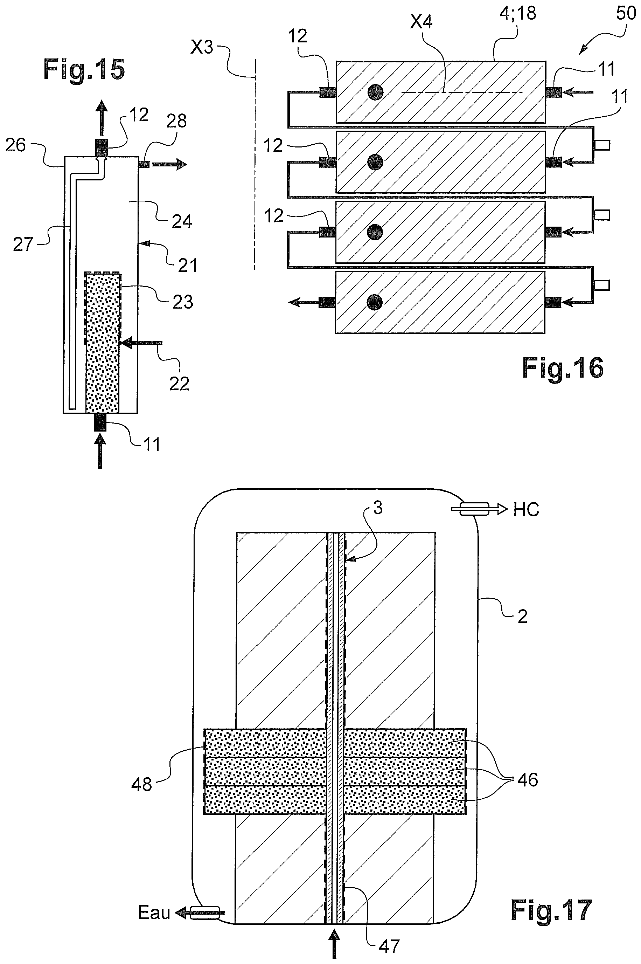

- La figure 15 est une vue en coupe et en élévation d'un dispositif de coalescence utilisant des cartouches identiques à celles utilisables dans un des dispositifs du premier ou du deuxième mode de réalisation ;
- La figure 16 est une vue en coupe et en élévation d'un dispositif de coalescence utilisant des cartouches identiques à celles utilisables dans un dispositif selon le troisième mode de réalisation ; et,
- La figure 17 est une vue partielle et en élévation d'un quatrième mode de réalisation, utilisant des cartouches similaires à celles illustrées aux figures 1 à 10.

La figure 1 illustre un réacteur de séparation 1 selon l'invention. Le réacteur 1 comprend une enceinte 2, un arbre 3 et des cartouches filtrantes 4. Dans l'exemple illustré, les cartouches filtrantes sont au nombre de quatre. L'arbre 3 comprend quatre supports 6, chacun pour une cartouche 4 respective. L'arbre comprend en outre, pour chaque cartouche, un bras distributeur 7 et un bras collecteur 8. Les cartouches 4, leurs supports 6 et les bras 7,8 sont disposés à l'intérieur de l'enceinte 2.

L'arbre est disposé sensiblement verticalement. Il est monté tournant autour d'un axe de rotation X3 relativement à deux paliers 9, chacun formé dans une paroi respective de l'enceinte 2. Chaque palier 9 forme une étanchéité pour l'enceinte autour de l'arbre 3 et l'axe de rotation X3 est sensiblement vertical.

Chaque bras distributeur 7 forme une conduite amont pour un liquide à filtrer, ladite conduite amont étant reliée à un canal amont 13 formé dans l'arbre 3. Chaque bras collecteur 8 forme une conduite aval pour un liquide qui a été filtré, ladite conduite aval étant reliée à un canal aval 14 formé dans l'arbre 3.

Comme particulièrement visible à la figure 2, chaque cartouche 4 est de forme sensiblement cylindrique autour d'un axe de cartouche respectif X4.

Chaque cartouche comprend une première extrémité axiale 11 prévue pour coopérer avec un bras distributeur 7 et une deuxième extrémité axiale 12 prévue pour coopérer avec un bras collecteur 8, de sorte qu'un liquide arrivant par le canal amont 13, puisse parcourir le bras distributeur 7, pénétrer par la première extrémité 11 dans la cartouche 4 pour y être filtré, en ressortir par la deuxième extrémité 12, puis parcourir le bras collecteur 8 pour repartir, filtré, par le canal aval 14. Chaque cartouche est remplie d'un matériau, de préférence un matériau polymère sorbant, c'est-à-dire qui peut être adsorbant ou absorbant pour les hydrocarbures et hydrophobe. Le matériau est sous une forme présentant une grande surface spécifique et permettant en même temps la circulation du liquide, entre la première extrémité 11 et la deuxième extrémité 12 de la cartouche.

En outre, chaque cartouche 4 comprend deux tourillons 16 faisant saillie de part et d'autre de la cartouche, à proximité de la deuxième extrémité 12 et définissant ensemble un axe de basculement XB pour la cartouche. L'axe de basculement XB est sensiblement perpendiculaire et sécant avec l'axe de cartouche X4.

Dans la position de la figure 1, dite position de filtration, chaque cartouche est disposée de sorte que son axe X4 est sensiblement vertical, la première extrémité 11 en haut et la deuxième extrémité 12 en bas, les tourillons 16 reposant sur un support 6 correspondant. Dans cette position, la première extrémité 11 est connectée au bras distributeur 7 correspondant et la deuxième extrémité 12 est connectée au bras collecteur 8 correspondant. De ce fait la circulation du liquide à filtrer se fait de haut en bas. Cette disposition est particulièrement avantageuse, le liquide pénétrant ainsi dans la cartouche de filtration allant à l'encontre de la tendance naturelle des hydrocarbures, moins denses que l'eau, à s'échapper au travers de la première extrémité de la cartouche sans y avoir été piégé.

Dans l'exemple illustré, chaque cartouche est montée de façon amovible sur son support et les bras 7,8 peuvent être connectés ou déconnectés des extrémités correspondantes, de préférence de façon automatique.

Lorsque les cartouches sont suffisamment chargées en hydrocarbures, par exemple au point où la filtration commence à perdre de son efficacité, la circulation du liquide dans les cartouches est arrêtée, puis les bras sont déconnectés d'avec les extrémités des cartouches. L'arbre 3 est ensuite mis en rotation. L'axe de basculement XB de chaque cartouche étant plus proche de la deuxième extrémité 12, le centre de gravité de la cartouche est de ce fait situé entre cet axe XB et la première extrémité 11 de la cartouche. Ainsi, sous l'effet de la force centrifuge, chaque cartouche bascule autour de son axe de basculement XB, de sorte qu'elle prend une position sensiblement horizontale telle que représentée aux figures 4 et 5, la deuxième extrémité 12 étant à proximité d'une paroi périphérique 17 de l'enceinte 2, la première extrémité 11 étant à proximité de l'arbre 3. Sous l'effet de cette force centrifuge, les hydrocarbures, piégés dans le matériau sorbant au cours de la précédente phase de filtration, sont entraînés vers la deuxième extrémité au travers de laquelle ils sont projetés contre la paroi périphérique 17. De là, les hydrocarbures s'écoulent au fond de l'enceinte où ils peuvent être récupérés.

Le matériau sorbant est de préférence compacté dans la cartouche avec une force au moins égale à la force de centrifugation qui est susceptible de lui être appliquée lors de l'essorage. Ainsi, on limite le tassement du matériau sorbant et le risque de créer des chemins préférentiels, ce qui limiterait le rendement du dispositif lors de la filtration.

Un tel dispositif est particulièrement adapté pour séparer des hydrocarbures présents à de faibles concentrations dans de l'eau. En particulier, ce dispositif s'applique au traitement des eaux de production pétrolière ou gazière, ou, dans le cas d'une pollution accidentelle ou non des eaux.

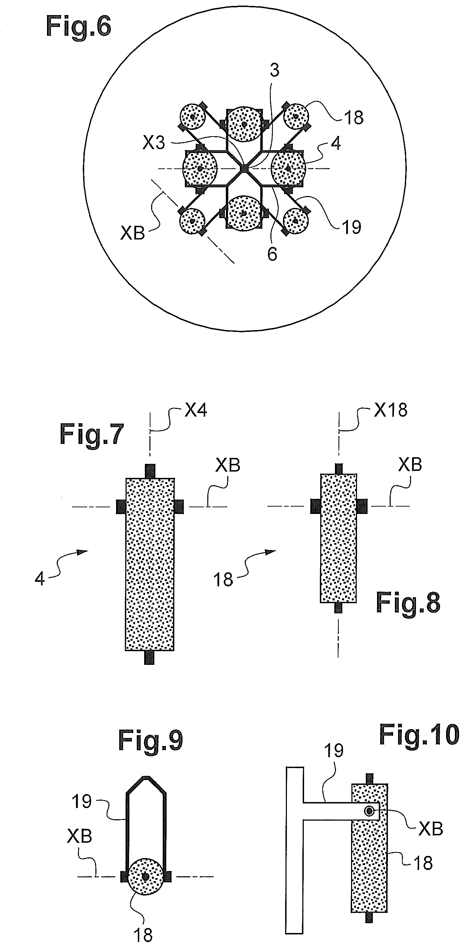

On va maintenant décrire un deuxième mode de réalisation en référence aux figures 6 à 10, en ce qu'il diffère du premier mode de réalisation précédemment décrit.

Dans l'exemple illustré aux figures 1 à 5, le dispositif comprend 4 cartouches 4. Dans l'exemple illustré aux figures 6 à 10, quatre autres cartouches secondaires 18 ont été rajoutées, chacune entre deux des premières cartouches 4. Chaque support secondaire 19 d'une cartouche secondaire 18 est fixé aux supports 6 des premières cartouches 4 voisines. Les figures 7 et 8, représentent respectivement une des premières cartouches 4 et une cartouche secondaire 18 à la même échelle. La cartouche secondaire 18 a une longueur axiale supérieure à celle de la première cartouche 4 ; en effet, du fait de la disposition en quinconce des cartouches secondaires relativement aux premières cartouches, leur axe de basculement XB est plus éloigné de l'axe de rotation X3 et plus proche de la paroi périphérique 17. La longueur axiale des cartouches secondaires 18 est donc adaptée à l'espace disponible pour leur basculement.

La figure 15 présente une cartouche de coalescence 21, prévue pour traiter un liquide, notamment un mélange d'hydrocarbures et d'eau, dans lequel la teneur en hydrocarbures est plus importante que celle prévue pour être traité avec les premières cartouches et les cartouches secondaires. La cartouche de coalescence définit un caisson dans lequel est logé un coalesceur 22. La deuxième extrémité 11, basse, débouche directement dans le coalesceur 22. A l'intérieur du caisson formé par la cartouche, le coalesceur 22 comprend une paroi poreuse 23, prévue pour la formation de gouttes d'hydrocarbures par coalescence et sa séparation d'avec l'eau ; ainsi, dans le volume intérieur 24 compris entre les parois 26 de la cartouche 21 et la paroi poreuse 23, des gouttes d'hydrocarbures migrent vers le haut de la cartouche, laissant l'eau sensiblement propre. Un tube plongeur 27, relié à la première extrémité 12, haute, de la cartouche 21 permet de prélever au fond du caisson l'eau ainsi nettoyée. Une évacuation 28, en partie haute de la cartouche, permet de récupérer les hydrocarbures qui y ont migré.

De préférence, les cartouches de coalescence 21 ont des formes extérieures sensiblement identiques à celles des cartouches de filtration 4,18, de sorte qu'elles peuvent être montées dans le dispositif 1 précédemment décrit en référence aux figures 1 à 6. Un système de traitement d'eaux chargé d'hydrocarbures peut donc avantageusement être composé d'un tel dispositif 1 et comprendre des cartouches de filtration 4,18 et de cartouches de coalescence 21. Ainsi, notamment, les cartouches de coalescence 21 peuvent être essorées dans le dispositif de filtration 1.

Le coalesceur 22 est de préférence rempli d'un matériau adsorbant ou absorbant les hydrocarbures et hydrophobe. Ce matériau sorbant est compacté dans le coalesceur 22 avec une force au moins égale à la force de centrifugation qui est susceptible de lui être appliquée lors de l'essorage. Ainsi, on limite le tassement du matériau sorbant et le risque de créer des chemins préférentiels, ce qui limiterait le rendement du dispositif lors de la coalescence.

On va maintenant décrire un troisième mode de réalisation pour un dispositif selon l'invention, en référence aux figures 11 à 14.

Comme dans l'exemple précédent, le dispositif de filtration 31 de la figure 11 comprend une enceinte 2 et un arbre 3 monté rotatif autour d'un axe de rotation X3 relativement à cette enceinte, ainsi que des cartouches de filtration remplies de matériau sorbant compacté, disposées dans l'enceinte et liées en rotation avec l'arbre 3. Cependant, dans cet exemple, les cartouches de filtration 34 ont une forme de secteur de cylindre de faible épaisseur et sont empilées en couche. Dans l'exemple illustré, chaque cartouche forme un secteur de 90 degrés, de sorte que chaque couche peut comprendre quatre cartouches 34. A la figure 11, seules trois couches sont représentées, et, à la figure 12, seules deux cartouches 34 d'une même couche sont représentées, vues de dessus.

Aux figures 11 et 12, le dispositif 31 est représenté statique, en position de filtration.

Chaque cartouche 34 comprend un orifice distal 3 5, à distance de l'axe X3, et, sur une face opposée, un orifice proximal 36, à proximité de l'axe X3. Chaque cartouche d'une couche peut être disposée tête-bêche relativement à celle d'une couche supérieure ou inférieure, de sorte que leurs orifices proximaux ou leurs orifices distaux communiquent entre eux. Ainsi, comme illustré sur la partie à gauche de la figure 11, l'orifice distal 35 de la cartouche de la couche intermédiaire communique avec l'orifice distal 35 de la cartouche inférieure. D'autre part, l'orifice proximal 36 de la même cartouche de la couche intermédiaire communique avec l'orifice proximal 36 de la cartouche supérieure. En outre, l'orifice distal 35 de la cartouche de la couche supérieure est relié à une arrivée 38 pour de l'eau chargée en hydrocarbures et l'orifice proximal 36 de la cartouche inférieure est relié à une évacuation 39 pour de l'eau filtrée.

Comme particulièrement illustré à la figure 12, l'orifice distal 35 de chaque cartouche 34 débouche, à l'intérieur de la cartouche, dans un canal répartiteur 37, se déployant sensiblement en arc de cercle, autour de l'axe X3, à la périphérie extérieure de la cartouche. Ainsi, lors de la filtration, le liquide, ici l'eau chargée, parcourt chaque cartouche entre le canal 37 et l'orifice proximal 36 correspondant, dans un sens ou dans l'autre, déposant au passage les hydrocarbures sur la surface intérieure de la cartouche ou au sein du matériau sorbant.

On va maintenant décrire la phase d'essorage, particulièrement en référence aux figures 13 et 14.

Chaque cartouche 34 comprend en outre un orifice périphérique 41, formé au travers de la paroi périphérique et cylindrique 42 de la cartouche. Durant la phase de filtration, l'orifice périphérique est maintenu bouché. Comme dans le premier mode de réalisation, lorsque les cartouches sont suffisamment chargées en hydrocarbures, l'alimentation 38 en eau chargée et l'évacuation 39 en eau filtrée sont déconnectées d'avec les cartouches 34, et l'orifice périphérique 41 de chaque cartouche est ouvert. L'arbre 3 et les cartouches 34 sont mis en rotation. Sous l'effet de la force centrifuge les hydrocarbures qui ont été retenus par le matériau sorbant se déplacent vers la paroi périphérique 42 et s'échappent de la cartouche au travers de l'orifice périphérique 41 de la cartouche. Les hydrocarbures sont ainsi projetés sur la paroi périphérique 17 de l'enceinte 2 et viennent ensuite s'accumuler au fond de cette enceinte, où ils peuvent être recueillis par une évacuation spécifique 43.

Comme particulièrement illustré à la figure 16, et comme dans le cas du premier mode de réalisation, les cartouches de filtration peuvent être remplacées par des cartouches de coalescence 46. Les cartouches de coalescence 46 ont sensiblement la même forme extérieure de secteur que les cartouches de filtration 34 précédemment décrites et sont aussi prévues pour être empilées par couches ; Elles contiennent aussi du matériau adsorbant ou absorbant les hydrocarbures. Le liquide, ici de l'eau chargée en hydrocarbures, est amené, par un canal 47 interne à l'arbre 3, dans chaque cartouche. Les hydrocarbures, sous forme de gouttes, et l'eau sont libérés au travers d'une paroi poreuse 48 périphérique de la cartouche 46 correspondante. Les gouttes d'hydrocarbures migrent vers le haut de l'enceinte 2, pleine d'eau et d'hydrocarbures. Les hydrocarbures ainsi séparés peuvent être récupérés en partie haute de l'enceinte 2, et l'eau, ainsi nettoyée de ses hydrocarbures, en partie basse. Les cartouches de coalescence 46 peuvent aussi être essorées par la mise en rotation de l'arbre 3, après avoir arrêté l'alimentation en eau chargée en hydrocarbures et vidé l'enceinte 2.

De préférence, les cartouches de filtration 34 et les cartouches de coalescence 46 sont amovibles, de sorte que le même dispositif peut être utilisé au sein d'un seul système permettant la coalescence et la filtration.

On va maintenant décrire un quatrième mode de réalisation, proche des premier et deuxième modes de réalisation, uniquement en ce qu'il en diffère, en référence à la figure 17.

Dans les deux premiers modes de réalisation, les cartouches 4,18, en phase de filtration, sont disposées de sorte que leur axe X4 respectif est sensiblement parallèle à l'axe X3 de l'arbre 3. Dans le quatrième mode de réalisation, les cartouches sont disposées de sorte que leur axe est sensiblement perpendiculaire à celui de l'arbre X4. Dans la disposition préférée, l'arbre étant sensiblement vertical, les cartouches sont disposées sensiblement horizontalement. Ainsi, les cartouches peuvent rester ainsi disposées lors de la phase d'essorage, sans avoir besoin de basculer, comme dans les deux premiers modes de réalisation ci-dessus. Comme illustré à la figure 17, les cartouches 4,18 peuvent alors être empilées sous forme de colonnes 50 s'étendant parallèlement à l'axe X3 de l'arbre. La première extrémité 11 de chaque cartouche est de préférence disposée à distance de l'axe de rotation X3, et la deuxième extrémité 12 à proximité de cet axe. Dans chaque colonne, pour chaque cartouche s'il y a lieu, sa première extrémité 11 est reliée à la deuxième extrémité 12 de la cartouche précédente, disposée au-dessus dans la même colonne, et sa deuxième extrémité 12 est reliée à la première extrémité 11 de la cartouche suivante, disposée au-dessous dans la même colonne 50.

Bien sûr, l'invention n'est pas limitée aux exemples qui viennent d'être décrits.

Ainsi, le nombre de cartouche cylindrique dans le premier mode de réalisation, peut différer de quatre. De la même façon, la taille angulaire des cartouches du troisième mode de réalisation, leur nombre par couche ou le nombre de couches qu'elle forme peut varier.

Un tel procédé, adapté à la dépollution de l'eau, est aussi adapté à la production d'hydrocarbures.

## Revendications

1. Dispositif de traitement pour un liquide, notamment une eau, chargée en hydrocarbures, **caractérisé en ce qu'**il comprend :
- une enceinte (2),
- un arbre (3), monté tournant dans ladite enceinte ; et,
- des cartouches de filtration (4, 18 ,34) remplies d'un matériau sorbant, liées en rotation avec ledit arbre ;
ledit dispositif pouvant prendre :
- une position statique, dans laquelle l'eau chargée peut être filtrée par lesdites cartouches ; et,
- une position d'essorage, dans laquelle l'arbre entraîne lesdites cartouches en rotation et dans laquelle les hydrocarbures sont restitués par les cartouches grâce à la force centrifuge.

2. Dispositif selon la revendication 1, **caractérisé en ce que** les cartouches de filtration (4, 18, 34) sont amovibles.

3. Dispositif selon l'une des revendications 1 ou 2, **caractérisé en ce que** l'arbre comprend un canal (13) et pour chaque cartouche de filtration (4, 18) une canalisation en forme de bras (7) prévue pour amener le liquide chargé depuis ledit canal (13) jusqu'à une première extrémité (11) de ladite cartouche (4, 18).

4. Dispositif selon l'une des revendications 1 à 3, **caractérisé en ce que** pour chaque cartouche de filtration (4, 18) une canalisation en forme de bras (7) est prévue pour amener le liquide filtré depuis une deuxième extrémité (12) de ladite cartouche (4, 18) jusqu'à un canal d'évacuation (14) formé dans l'arbre (3).

5. Dispositif selon l'une des revendications 3 ou 4, **caractérisé en ce que** chaque bras (6,7) est déconnectable, de préférence de façon automatisée à l'extrémité correspondante (11,12).

6. Dispositif selon l'une des revendications 1 à 5, **caractérisé en ce que** dans la position statique les cartouches de filtration (4, 18) sont disposées sensiblement verticalement et **en ce que** chaque cartouche porte un axe (XB) de basculement, disposé de sorte que dans la position d'essorage, sous l'effet de la force centrifuge, ladite cartouche prenne une position sensiblement horizontale.

7. Dispositif selon l'une des revendications 1 ou 2, caractérisé en ce chaque cartouche de filtration (34) a une forme de secteur cylindrique et en ce que les cartouches sont disposées par couches cylindriques autour de l'arbre, chaque cartouche communiquant avec une cartouche voisine d'une couche voisine par des orifices appropriés (35,36), de sorte que, dans la position statique, le liquide parcourt chaque cartouche radialement, puis sa voisine de la couche suivante.

8. Dispositif selon la revendication 7, **caractérisé en ce que** chaque cartouche comprend un orifice périphérique (41), maintenu bouché en position statique et ouvert en position d'essorage, de sorte que les hydrocarbures retenus par le matériau sorbant sont éjectés par la force centrifuge au travers dudit orifice périphérique.

9. Système de filtration, **caractérisé en ce qu'**il comprend un dispositif (1) selon l'une des revendications précédentes et des cartouches de coalescence (21) adaptées pour être interchangées avec les cartouches de filtration.

## Patentansprüche

1. Vorrichtung zur Behandlung einer Flüssigkeit, insbesondere eines Wassers, die/das mit Kohlenwasserstoffen beladen ist, **dadurch gekennzeichnet, dass** sie umfasst:
- eine Einschließung (2),
- eine Welle (3), die drehbar in der Einschließung montiert ist; und
- Filterkartuschen (4, 18, 34), die mit einem sorptionsfähigen Material gefüllt sind, die drehfest mit der Welle verbunden sind;
wobei die Vorrichtung einnehmen kann:
- eine statische Position, in der das beladene Wasser durch die Kartuschen filtriert werden kann; und,
- eine Schleuderposition, in der die Welle die Kartuschen in Drehung versetzt und in der die Kohlenwasserstoffe von den Kartusche auf Grund der Zentrifugalkraft freigegeben werden.

2. Vorrichtung nach Anspruch 1, **dadurch gekennzeichnet, dass** die Filterkartuschen (4, 18, 34) abnehmbar sind.

3. Vorrichtung nach einem der Ansprüche 1 oder 2, **dadurch gekennzeichnet, dass** die Welle einen Kanal (13) und für jede Filterkartusche (4, 18) eine Kanalisation in Form eines Armes (7) umfasst, die dafür vorgesehen ist, die beladene Flüssigkeit von dem Kanal (13) bis zu einem ersten Ende (11) der Kartusche (4, 18) zu bringen.

4. Vorrichtung nach einem der Ansprüche 1 bis 3, **dadurch gekennzeichnet, dass** für jede Filterkartusche (4, 18) eine Kanalisation in Form eines Armes (7) vorgesehen ist, um die filtrierte Flüssigkeit von einem zweiten Ende (12) der Kartusche (4, 18) zu einem Abflusskanal (14) zu bringen, der in der Welle (3) ausgebildet ist.

5. Vorrichtung nach einem der Ansprüche 3 oder 4, **dadurch gekennzeichnet, dass** jeder Arm (6, 7), vorzugsweise in automatisierter Form, von dem entsprechenden Ende (11, 12) trennbar ist.

6. Vorrichtung nach einem der Ansprüche 1 bis 5, **dadurch gekennzeichnet, dass** die Filterkartuschen (4, 18) in der statischen Position im Wesentlichen vertikal angeordnet sind und dass jede Kartusche eine Kippachse (XB) trägt, die so angeordnet ist, dass die Kartusche in der Schleuderposition unter der Einwirkung der Zentrifugalkraft eine im Wesentlichen horizontale Position einnimmt.

7. Vorrichtung nach einem der Ansprüche 1 oder 2, **dadurch gekennzeichnet, dass** jede Filterkartusche (34) eine Form mit zylindrischem Querschnitt aufweist und die Kartuschen in zylindrische Lagen um die Welle angeordnet sind, wobei jede Kartusche mit einer benachbarten Kartusche einer benachbarten Lage durch geeignete Öffnungen (35, 36) in Verbindung steht, so dass die Flüssigkeit in der statischen Position jede Kartusche radial durchläuft, und dann ihre benachbarte Kartusche in der folgenden Lage.

8. Vorrichtung nach Anspruch 7, **dadurch gekennzeichnet, dass** jede Kartusche eine Öffnung (41) in ihrem Umfang umfasst, die in statischer Position verschlossen gehalten wird und in Schleuderposition offen gehalten wird, so dass die von dem sorptionsfähigen Material festgehaltenen Kohlenwasserstoffe durch die Zentrifugalkraft durch die Öffnung im Umfang herausgeschleudert werden.

9. Filtrationssystem, **dadurch gekennzeichnet, dass** es eine Vorrichtung (1) nach einem der vorhergehenden Ansprüche und Koaleszenzkartuschen (21) umfasst, die daran angepasst sind, mit den Filterkartuschen ausgetauscht zu werden.

## Claims

1. Device for treating a liquid, in particular water, loaded with hydrocarbons, **characterised in that** it comprises:
- an enclosure (2),
- a shaft (3), which is rotatably mounted in said enclosure; and,
- filtering cartridges (4, 18, 34) filled with a sorbent material, which are rotatably connected to said shaft;
said device able to assume:
- a static position, wherein the loaded water can be filtered by said cartridges; and,
- a centrifuging position, wherein the shaft drives said cartridges in rotation and wherein the hydrocarbons are released by the cartridges as a result of the centrifugal force.

2. Device according to claim 1, **characterised in that** the filtering cartridges (4, 18, 34) are removable.

3. Device according to one of claims 1 or 2, **characterised in that** the shaft comprises a channel (13) and for each filtering cartridge (4, 18) a pipe in the shape of an arm (7) provided to convey the loaded liquid from said channel (13) to a first end (11) of said cartridge (4, 18).

4. Device according to one of claims 1 to 3, **characterised in that** for each filtering cartridge (4, 18) a pipe in the shape of an arm (7) is provided to convey the filtered liquid from a second end (12) of said cartridge (4, 18) to a discharge channel (14) formed in the shaft (3).

5. Device according to one of claims 3 or 4, **characterised in that** each arm (6,7) can be disconnected, preferably in an automated manner at the corresponding end (11, 12).

6. Device according to one of claims 1 to 5, **characterised in that** in the static position the filtering cartridges (4, 18) are arranged substantially vertically and **in that** each cartridge carried a tipping axis (XB), arranged in such a way that in the centrifuging position, under the effect of the centrifugal force, said cartridge assumes a substantially horizontal position.

7. Device according to one of claims 1 or 2, **characterised in that** each filtering cartridge (34) has the shape of a cylindrical sector and **in that** the cartridges are arranged in cylindrical layers about the shaft, with each cartridge communicating with an adjacent cartridge via suitable orifices (35, 36), in such a way that, in the static position, the liquid travels through each cartridge radially, then the neighbour thereof of the next layer.

8. Device according to claim 7, **characterised in that** each cartridge comprises a peripheral orifice (41), maintained closed off in static position and open in centrifuging position, in such a way that the hydrocarbons retained by the sorbent material are ejected by the centrifugal force through said peripheral orifice.

9. System for filtering, **characterised in that** it comprises a device (1) according to one of the preceding claims and coalescence cartridges (21) suitable for being interchanged with the filtering cartridges.
